# EUROPEAN PATENT APPLICATION

(11) **EP 4 778 895 A1**
(43) Date of publication of application: **22.07.2026**
(21) Application number: 25382031.0
(22) Date of filing: 20.01.2025
(51) Int. Cl.: C03B 19/01, B23K 26/20, B33Y 70/10, C03C 23/00, C03C 8/14

(54) **METHOD AND DEVICE FOR LASER-ASSISTED MORPHING GLASS PARTS**

(71) Applicant: Universidad de Vigo, 36310 Vigo (Pontevedra) (ES)
(72) Inventor: GONZÁLEZ LONGUEIRA, Marco, E-36310 Vigo (ES); SAJJAD, Hamza, E-36310 Vigo (ES); COMESAÑA PIÑEIRO, Rafael, E-36310 Vigo (ES); FERNÁNDEZ ARIAS, Mónica, E-36310 Vigo (ES); BARRO GUIZÁN, Óscar, E-36310 Vigo (ES); CALVO GARCÍA, Erik, E-36310 Vigo (ES); DEL VAL GARCÍA, Jesús, E-36310 Vigo (ES); POU SARACHO, Juan María, E-36310 Vigo (ES)
(74) Representative: ABG Intellectual Property Law, S.L.

(57) **Abstract**

The present invention provides, in a first inventive aspect, a method for morphing glass parts having a desired shape and composition. In particular, said glass parts can be obtained by means of the laser-assisted method as described in the present invention. The present invention also discloses a second inventive aspect which provides a device for morphing a glass part thereof.

## Description

### TECHNICAL FIELD OF THE INVENTION

The present invention relates to a method for morphing glass parts with custom tailored shape and composition. The present invention also relates to the system for morphing glass parts thereof.

### BACKGROUND OF THE INVENTION

Current glass morphing technology requires the use of expensive molds. Temperature variations during operation due to heat transfer from the glass to the mold must be carefully controlled and glass adhesion problems limit the feasible glass thickness. In addition, the viscosity of the glass at different forming stages must be maintained without excessive variability to avoid heterogeneities in the containers. Therefore, the design criteria of the preform line depend on the glass composition, and a known limitation is that only one type of glass composition can be used on each line.

As an alternative to the use of molds, other methods have been assessed for the manufacturing of glass objects without the use of molds, usually categorized as additive manufacturing (AM), popularly known as 3D printing. The available techniques to manufacture glass objects by additive manufacturing methods or 3D printing comprise:
a) Melting and extrusion of glass;
b) Direct Ink Writing;
c) Stereolitography and 2 photon polymerization using polymer-glass solutions;
d) Using glass rods, filaments or tubes for glass deposition; or
e) Selective Laser Sintering (SLS) or Selective Laser Melting (SLM) based methods.

In document US10266442B2, glass objects are produced by extruding and melting glass. A crucible kiln melts the parent glass material and a nozzle extrudes the molten glass while one or more actuators move the nozzle to build a glass object on a building platform. The drawback of this method is the risk of nozzle damaging by molten glass, being limited to glass with low glass transition temperature.

In document WO2017214179A1, glass objects are manufactured using the direct ink writing of a glass-forming material composed of a mixture of silica, germania-silica, and/or titania-silica glasses with a solvent. This method requires the preparation of composition specific solvents, additional intermediate processing steps, such as ultraviolet light curing of the solvent or chemical etching, are required, plus an additional thermal treatment to remove the solvent.

Glass objects have been also obtained by means of stereolithography [Liu et al. (2018) RSC Adv., 2018,8, 31564-31567]. Objects with good finish were obtained, but the method requires a specific photocurable polymer with composition tuned to both the wavelength of the laser used and the individual composition of the glass. In US2024300170A1 the two photon polymerization (2pp) technique was used to obtain optical glass elements at micrometric scale. The main drawback of this technique as in the stereolitography, is the need of specific photocurable polymers with compositions compatible with those of the specific glasses. Moreover, only very small objects can be produced by this technique.

In document US2023241838A1, a glass rod is fed into a 3D printing machine able to heat up the glass rod moltening/softening the tip and, by moving a heated platform according to a predetermined computerized model, produce a glass object. The technique is able to produce glass parts but there is a need to start with a calibrated rod of the specific glass, to be fed into the system. In US11305489B2 a similar technique is used but the system can be fed with a glass rod or a spool. Again, the feed stock glass material needs to be in a precise form prior to starting the manufacturing process.

In particular, documents US2022267188A1 and US2024269919A1 describe the production of glass objects from glass fibers using a laser to melt/soften the tip of the fiber. This method allows obtaining high quality parts, but the number of glass compositions is limited to the availability of them in form of a fiber.

Finally, Selective Laser Sintering (SLS) and Selective Laser Melting (SLM) are other AM alternatives tested for glass: SLS has been applied to sinter round grain silica using a CO2 laser source to achieve limited densification [Tang et al (2003) Materials and Design 24 (8), 623-62921]. SLS has also been used to sinter soda-lime glass using a Nd:YAG laser [Fateri et al. (2014) Phys. Procedia 56, 357-364]; monolayers from irregular quartz particles in water suspension were produced by SLM [Khmyrov et al. (2016) Int J Adv Manuf Technol 85:1461-1469]. But SLS and SLM require a relatively high volume of strictly sized powder bed, difficult to achieve from all types of glasses.

Therefore, there is a need in the art for a method for morphing glass parts which provides a solution to the above-mentioned issues and a device for manufacturing glass parts thereof.

### SUMMARY OF THE INVENTION

The present invention has the objective of solving the aforementioned problems posed by the existing techniques. The present invention provides a method for morphing glass parts having a desired shape and composition according to claim 1 and a device for manufacturing glass according to claim 12. Preferred embodiments of the invention are defined in the dependent claims.

In a first inventive aspect, the invention provides a method for morphing glass parts, the method comprising the following steps:
a) selecting a glass raw material comprising particles,
b) providing the glass raw material into a crushing module, the crushing module being configured for crushing the glass raw material into glass powder,
c) feeding the glass powder from the crushing module into a powder feeder, the powder feeder being configured for,
   o feeding the glass powder forming a flow by the action of gravity into an injection module by means of a plurality of entries, the injection module being comprised in a processing chamber, or
   ∘ mixing the glass powder with a carrier gas forming a biphasic glass/gas flow and feeding said biphasic glass/gas flow into an injection module by means of a plurality of entries, the injection module being comprised in a processing chamber,
d) providing a laser source configured for emitting a laser beam and wherein the particles of the glass powder are suitable for absorbing the radiation of the laser beam of the laser source,
e) guiding the laser beam of the laser source towards a focusing module having ultra-long focal distance, wherein the focusing module is located at a predetermined distance from a converging point comprised in the injection module so that the converging point coincides with the focal plane of the laser beam of the laser source,
f) feeding the glass powder or the biphasic glass/gas flow into the plurality of entries of the injection module, the injection module being configured for focusing the glass powder or the biphasic glass/gas flow at the converging point of the injection module and the plurality of entries being in a fluidic communication with the converging point by means of an inclined conduit conformed between a hollow cone and a conical casing of the injection module,
g) irradiating the glass powder at the converging point of the injection module by means of the laser beam of the laser source so that the glass powder moltens/softens and is deposited on a mobile platform, the mobile platform being configured for depositing the moltened/softened glass part, positioning and orientating said mobile platform by means of a kinematic module in the three-dimensional Cartesian coordinate system having X, Y and Z axis,
h) providing heat within the processing chamber, the processing chamber being suitable for controlling the temperature within the processing chamber and comprising a plurality of sensors configured for controlling the parameters of the glass part.

In the present method of the invention, the glass raw material is selected before its introduction into the crushing module so that it is provided with the desired chemical composition which impacts the shape and composition of the morphed glass.

The method for morphing glass parts according to the first inventive aspect of the invention helps avoiding any accumulation of glass powder inside the injection module since the melting/softening of said glass powder occurs only at the converging point of said injection module which is the point where the glass powder, or the biphasic glass/gas flow, and the laser beam are converging and said converging point is located outside of the injection module. Furthermore, the converging point is a projection point where both the laser beam and the glass powder, or the biphasic glass/gas flow converge. Thus, the present invention provides a solution in order to avoid the formation of occlusion or clogging within the injection module which might be a result of the clingy aspect of the glass powder when moltened/softened through any method/device known in the art.

In step b) of the method of the invention, where the glass raw material is crushed by means of the crushing module, the glass powder obtained from the crushing process has a granulometry which allows the powder feeder to be fed in optimal conditions.

Furthermore, the laser source provided in step d) has a power value and a wavelength value which allows the radiation of the laser beam to be absorbed by the glass powder particles while in operative conditions.

Advantageously, in step e), the focusing module has an ultra-long focal distance so that said focusing module is located at the predetermined distance which is preferably as far away as possible from the converging point of the injection module and from the processing chamber.

In the context of the present invention, the term "ultra-long focal distance" refers to a focal distance greater than 300 mm.

In step g), the glass powder located at the converging point of the injection module can be either glass powder only or the glass powder within the biphasic glass/gas flow.

In particular embodiments, the plurality of sensors are configured for controlling the temperature, the viscosity and the absorption of the morphed glass parts obtained.

In an embodiment, the wavelength of the laser beam of the laser source is between 100 and 15.000 nanometers, and more preferably in the range between 1.000 and 12.000 nanometers.

Advantageously, the application of the laser beam within this wavelength range maximizes the absorption of the laser radiation by the glass powder particles which improves the efficiency of the method for morphing glass of the invention.

In an embodiment, the biphasic glass/gas flow is fed continuously from the powder feeder into the injection module with a flow rate between 1 and 250 g/min, and more preferably in the range between 1 and 60 g/min.

Advantageously, a biphasic glass/powder flow within this range allows an optimal moltening/softening of the glass so that complete transformation of the glass powder into a solid glass part is guaranteed.

In an embodiment, the gas of the biphasic glass/gas flow comprises an inert gas, preferably Ar, He, N2.

In an embodiment, the gas of the biphasic glass/gas flow is an inert gas, preferably Ar, He, N2.

Advantageously, the selection of an inert gas avoid that said gas react with the powder particles.

In an embodiment, the temperature within the processing chamber is in a range between 200°C and 3000°C, and more preferably in the range between 300°C and 1200°C.

Advantageously, working in this range of temperatures allows avoiding the generation of stresses in the glass part that could put in risk the mechanical integrity of said glass part.

In an embodiment, the processing chamber comprises three heating zones that allow to carry out an annealing process on the glass part by lowering the mobile platform in a controlled manner following a desired annealing temperature-time profile.

In the technical field of the present invention, a person skilled in the art would apply the correct temperature-time profile for carrying out the corresponding annealing process on the glass parts.

Advantageously, performing a controlled annealing process allows avoiding the cracking of the glass part.

In an embodiment, the glass raw material comprises at least one oxide of the following elements: Si, B, Al, Na, K, Ca, Mg, S, Fe, Ti, Zr, As, P, V, Cr, Co or Cu; more preferably one oxide of the following elements: Si, B, P, Al, Na, Ca, K, Mg or Fe.

In an embodiment, wherein in step g), the irradiance of the laser beam of the laser source at the converging point of the injection module is in a range between 0.01 MW/cm2 and 10 MW/cm2, and more preferably in a range between 0.5 MW/cm2 and 4 MW/cm2.

Advantageously, an irradiance selected within this range allows optimal moltening/softening of the glass powder so that no unmolten particles remain on the glass part obtained.

In an embodiment, the laser source is selected from Nd:YAG, Nd:glass, Nd:YVO4, Er, Yb, Tm, diode, fiber, disk, CO2, CO, HeCd, copper vapor, Iodine, Argon, Krypton or chemical lasers (HF, DF).

In an embodiment, the focusing module with ultra-long focal distance has a focal length in the range between 300 mm and 3,000 mm, preferably between 700 mm and 1500 mm.

Advantageously, the selection of this focal length range allows placing the focusing module far away from the processing chamber, thus, allowing to prevent the optical elements from being affected by the high temperature reached inside the processing chamber.

In one embodiment, the mobile platform is made of a refractory material such as zirconia, mullite alumina, silicon dioxide or similar materials. Advantageously, the selection of these materials allows to build the glass part without damaging the mobile platform during the process.

In a particular embodiment, the irradiation of the laser beam over the glass powder is carried out in vacuum. Advantageously, working in vacuum allows avoiding the formation of porosity inside the glass part.

In a second inventive aspect, the present invention provides a device for morphing glass parts, the device comprising:
- a laser source configured for emitting a laser beam,
- a focusing module having ultra-long focal distance,
- a laser beam guiding module configured for guiding the laser beam,
- a crushing module configured for crushing glass raw material into glass powder wherein the glass powder comprises particles, said particles being suitable for absorbing the radiation of the laser beam of the laser source,
- a powder feeder located downstream the crushing module,
- a processing chamber configured for controlling the temperature within the processing chamber, the processing chamber comprising:
   ∘ an injection module located downstream the powder feeder and downstream the focusing module, the injection module being configured for being fed with glass powder forming a flow by the action of gravity, or biphasic glass/gas flow, by means of a plurality of entries and receive the laser beam of the laser source,
   ∘ a mobile platform configured for positioning and orienting glass parts in a three-dimensional Cartesian coordinate system having X, Y and Z axis, the mobile platform being actuated by means of a kinematic module, and
   ∘ a plurality of sensors configured for controlling the parameters of the glass parts,
- controlling means configured for controlling the laser source, the focusing module, the crushing module, the powder feeder, the processing chamber, the injection module and the kinematic module,
wherein
the powder feeder is configured for:
   - feeding the glass powder forming a flow by the action of gravity into the plurality of entries of an injection module comprised in a processing chamber, or
   - mixing the glass powder with a carrier gas forming a biphasic glass/gas flow and feeding said biphasic glass/gas flow into the plurality of entries of an injection module comprised in a processing chamber,
the injection module further comprises
   a converging point where the glass powder or the biphasic glass/gas flow is focused, and
   an inclined conduit in fluidic communication with the plurality of entries and the converging point, wherein the inclined conduit is conformed between a hollow cone and a conical casing of the injection module, and
the focusing module is located at a predetermined distance from the converging point of the injection module so that the converging point coincides with the focal plane of the laser beam of the laser source.

In the present device of the invention, the glass raw material is selected before its introduction into the crushing module so that it is provided with the desired chemical composition and shape which impacts the formation and composition of the obtained glass parts.

The crushing module of the device of the invention permits crushing the glass raw material at a specific granulometry which allows the powder feeder to be fed in an optimal manner.

Furthermore, the laser source has a power value and a wavelength value which allows the radiation of the laser beam to be absorbed by the glass powder particles in optimal conditions.

Advantageously, the focusing module has an ultra-long focal distance so that said focusing module is located at the predetermined distance which is preferably as far away as possible from the converging point of the injection module and from the processing chamber.

In the context of the present invention, the term "ultra-long focal distance" refers to a focal distance greater than 300 mm.

Thanks to the device of the invention, the glass powder located within the injection module, which can be either glass powder only or the glass powder within the biphasic glass/gas flow, moltens/softens so that it becomes shapeable.

In an embodiment, the laser beam guiding module is a mirror or a reflector module located upstream or downstream the focusing module, the mirror or reflector module being configured for guiding the laser beam of the laser source.

Advantageously, the configuration when the mirror or reflector module is located downstream the focusing module allows reducing the exposure of the focusing module to the high temperatures caused by the processing chamber.

In an embodiment, the trajectory that the laser beam of the laser source has to travel between the laser source, the focusing module, the reflector module and the injection module, can be enclosed by means of tubes. More preferably, these tubes can be made of a refractory material such as zirconia, mullite alumina, silicon oxide, in order to prevent the heat transmission from the processing chamber.

In an embodiment, the processing chamber further comprises openings configured for allowing observation and monitoring of the manufacturing process by means of the plurality of sensors.

Advantageously, the openings of the processing chamber help monitoring the manufacturing process thanks to the plurality of sensors without having to open the processing chamber which would lead to a significant loss of temperature within said processing chamber.

In an embodiment, the crushing module is a laser glass crushing module.

In an embodiment, the mobile platform of the processing chamber comprises a refractory material such as zirconia, mullite alumina or silicon dioxide. In a particular embodiment, the mobile platform is made of a refractory material such as zirconia, mullite alumina or silicon dioxide.

Advantageously, the selection of these materials allows to build the manufactured glass without damaging the mobile platform during the process. That is, these materials resist the high temperatures within the processing chamber in operative conditions.

In an embodiment, the irradiation of the laser beam over the glass powder is carried out in vacuum conditions. Advantageously, working in vacuum conditions avoids the formation of porosity inside the manufactured glass.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1-2: These figures are schematic representations of the device for manufacturing glass according to embodiments the invention.
- Figure 3: This figure is a cross-sectional view of the focusing module according to an embodiment of the invention.
- Figure 4: This figure is a detailed view of the injection module according to an embodiment of the invention.
- Figure 5: This figure is a cross-sectional view of the processing chamber according to an embodiment of the device of the invention.

### DETAILED DESCRIPTION OF THE INVENTION

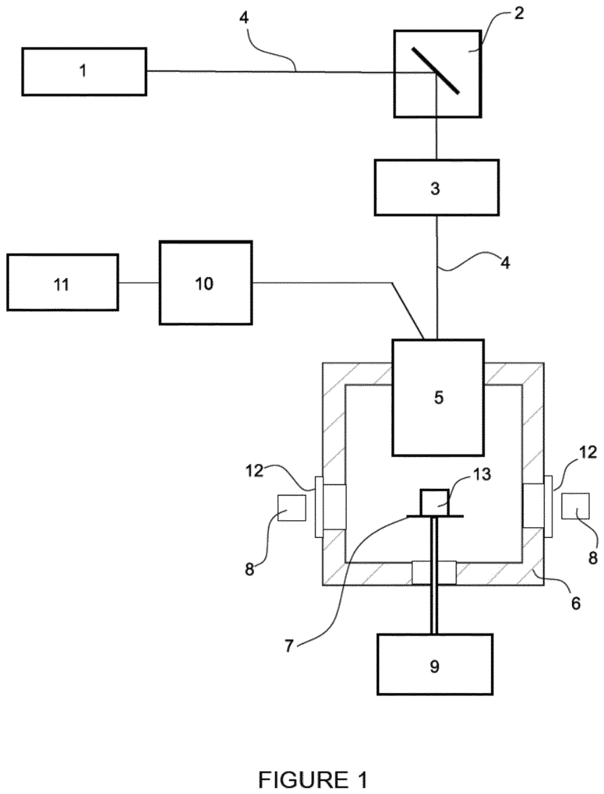

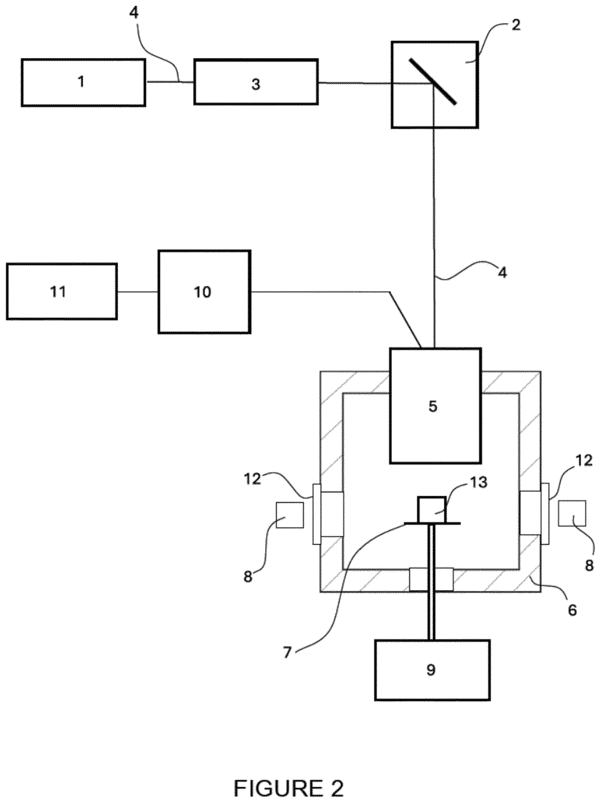

Figures 1 and 2 are schematic representations of the device for manufacturing glass according to embodiments of the invention.

Figures 1 and 2 depict a device for morphing glass parts, the device comprises a laser source (1) configured for emitting a laser beam (4) and a focusing module (3) having ultra-long focal distance. The device also includes a crushing module (11) configured for crushing glass raw material into glass powder wherein the glass powder comprises particles, said particles being suitable for absorbing the radiation of the laser beam (4) of the laser source (1) and a powder feeder (10) located downstream the crushing module.

The device for morphing glass parts shown in figures 1 and 2 also comprises a processing chamber (6) configured for controlling the temperature within the processing chamber (6). The processing chamber (6) comprises:
- an injection module (5) located downstream the powder feeder (10) and downstream the focusing module (3), the injection module (5) being configured for being fed with glass powder or a biphasic glass/gas flow by means of a plurality of entries (not shown) and receive the laser beam (4) of the laser source (1),
- a mobile platform (7) configured for positioning and orienting glass in a three-dimensional Cartesian coordinate system having X, Y and Z axis, the mobile platform being actuated by means of a kinematic module (9), and
- a plurality of sensors (8) configured for controlling the parameters of the glass.

Finally, the device for morphing glass parts as shown in figures 1 and 2 comprises controlling means (not shown in the figures) configured for controlling the laser source (1), the focusing module (3), the crushing module (11), the powder feeder (10), the processing chamber (6), the injection module (5) and the kinematic module (9).

According to the invention, the powder feeder (10) is configured for feeding the glass powder forming a flow by the act of gravity into the plurality of entries of the injection module (5), or mixing the glass powder with a carrier gas forming a biphasic glass/gas flow and feeding said biphasic glass/gas flow into the plurality of entries of the injection module (5).

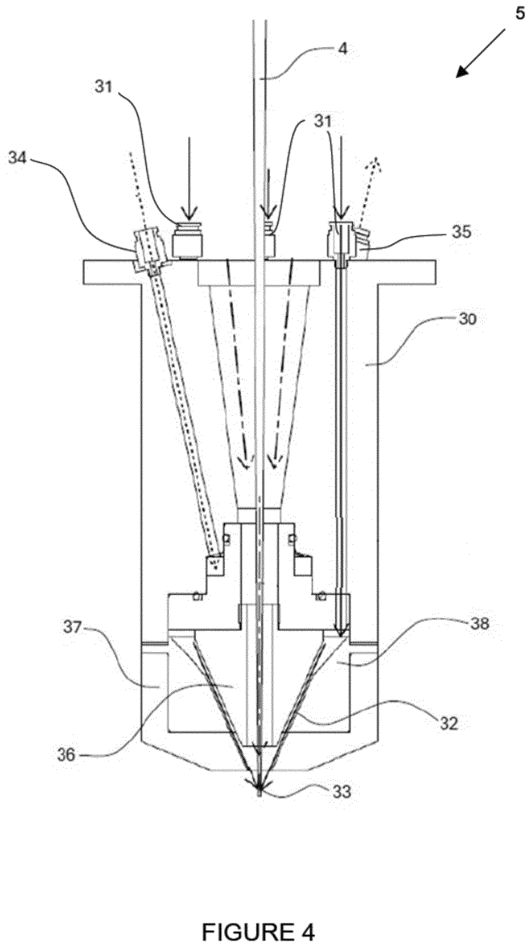

Also, as shown in figure 4, the injection module (5) further comprises a converging point (33) where the glass powder or the biphasic glass/gas flow is focused, and an inclined conduit (32) which is in fluidic communication with the plurality of entries (31) and the converging point (33). The inclined conduit (32) is conformed between a hollow cone (36) and a conical casing (38) of the injection module (5). According to the inventive aspects of the invention, the focusing module (3) is located at a predetermined distance from the converging point (33) of the injection module (5) so that the converging point (33) coincides with the focal plane of the laser beam (4) of the laser source (1).

In particular, figure 1 shows an embodiment where the device further comprises a laser beam guiding module (2). In some embodiments, the laser beam guiding module (2) is a mirror or a reflector module (2) located upstream the focusing module (3). Figure 2 shows another embodiment where the device further comprises a mirror or a reflector module (2) located downstream the focusing module (3). In both figure 1 and figure 2, the laser beam guiding module (2) is configured for reflecting the laser beam (4) of the laser source (1).

According to the invention, the focusing module (3) has an ultra-long focal distance so that said focusing module (3) is located at the predetermined distance which is preferably as far away as possible from the converging point (33) of the injection module (5) and from the processing chamber (6). Therefore, the focusing module (3) is not affected by the high temperature of the processing chamber (6) that would end up having a negative impact on the integrity of the optics used in said focusing module (3).

The glass raw material selected for morphing the glass part (13) obtained by means of the method/device of the present invention is glass raw material which is crushed and transformed into glass powder. This glass raw material, which is introduced into the crushing module (11), is preferably obtained from glass pieces or cullet. This specific glass raw material must be crushed by means of the crushing module (11) so that its average particle size is adapted to the dimensions of the laser beam (4) diameter on the focal plane of the focusing module (3).

In an embodiment, the crushing module (11) is a laser glass crushing module (11).

In an embodiment, once crushed, the glass powder is fed to the powder feeder (10) which is configured for combining said glass powder with a carrier gas, giving rise to a biphasic glass/gas flow which is fed to the injection module (5). In the injection module (5), the biphasic glass/gas flow is focused coaxially to the laser beam (4) of the laser source (1) in such a way that the biphasic glass/gas flow introduced into the injection module (5) by means of the plurality of entries (31) reaches the converging point (33) which coincides with the focal plane of the laser beam (4) of the laser source (1).

In this way, on one side, the glass powder is heated and moltened/softened only by the action of the laser beam (4) of the laser source (1) and not by means of any additional heaters and, on the other side, the moltened/softened of the glass powder only occurs at the converging point (33) which avoids any type of clogging within the rest of elements of the comprised in the injection module (5).

As shown in figures 1 and 2, the injection module (5) is integrated into the processing chamber (6). This processing chamber (6) is provided with heating elements (not shown in the figure) so that the interior of the processing chamber (6) is able to be set and reach a temperature up to 1500 °C. The processing chamber (6) comprises a mobile platform (7) on which the moltened/softening glass is deposited to form the manufactured glass part (13).

As depicted in figures 1 and 2, the mobile platform (7) is connected to a kinematic module (9) that allows a three-dimensional movement of the mobile platform (7) within the processing chamber (6) without having to remove the glass part (13) to be morphed from the processing chamber (6).

The processing chamber (6) is equipped with a plurality of sensors (8) placed on the outside of the processing chamber (6) in order to monitor the morphing process. Constant and live information about the process reaches the plurality of sensors (8) through special openings (12) that allow observation of the process without a significant loss of temperature.

In the particular embodiment of figure 2, which depicts an alternative embodiment of the present invention, the laser source (1) emits a laser beam (4) which is directed towards the focusing module (3). In this embodiment, the focusing module (3) is located immediately after the laser source (1), that is, downstream the laser source (1), and before the reflector module (2) or mirror. This configuration allows reducing the exposure of the focusing module (3) to high temperatures generated by the processing chamber (6).

In an embodiment, the mirror or reflector module (2) can be adequately refrigerated (not shown in the figure) in order to keep the temperature below a predetermined value in order to ensure no distortion on its functioning while in operative conditions.

The other modules shown in Figure 2 have the same role and mode of operation as those shown in Figure 1.

In an embodiment, the trajectory that the laser beam (4) of the laser source (1) has to travel between the laser source (1), the focusing module (3), the reflector module (2) and the injection module (5), can be enclosed by means of tubes. More preferably, these tubes can be made of a refractory material such as zirconia, mullite alumina, silicon oxide, in order to prevent the heat transmission from the processing chamber (6).

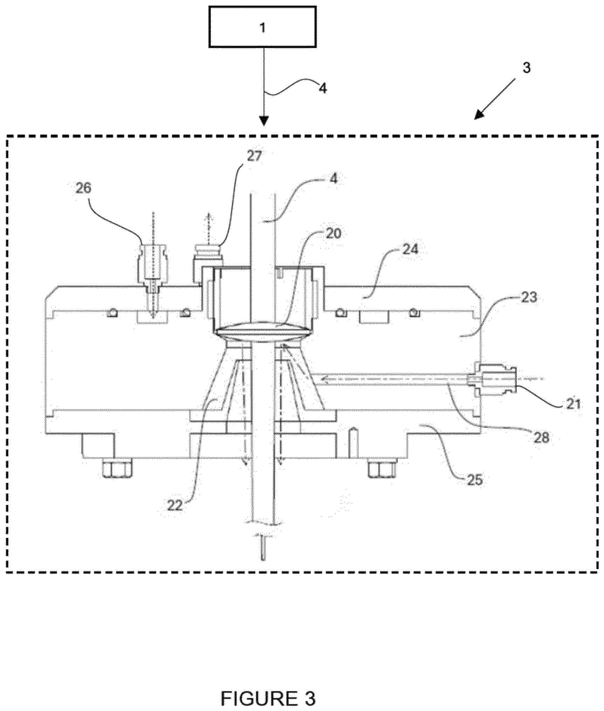

Figure 3 shows a cross-sectional view of an example of the focusing module (3) having an ultra-long focal length, preferably greater than 300 mm. The laser beam (4) of the laser source (1) is focused by a lens (20) or a set of lenses that have an ultra-long focal length.

In an embodiment, using lenses (20) with focal length between 500 mm to 2000 mm allow the focusing module (3) to be placed in a position which is very far away from the processing chamber (6) and therefore protect the optical elements from the high temperatures generated within the processing chamber (6).

In an embodiment as the one shown in figure 3, the focusing module (3) comprised a gas entry (21), a gas duct (28) and a bending duct (22), all in fluidic communication. As shown by the discontinued arrow, a jet protective gas is introduced into the gas entry (21) and reached the bending duct (22) via the gas duct (28). The jet projective gas is directed towards the lens (20) and is configured for cooling and protecting said lens (20) thanks to the particular shape of the bending duct (22). Once the jet protective gas has entered in contact with the upper portion of the bending duct (22), said jet protective gas is oriented towards the injection module (5) not shown in figure 3 but located towards the direction indicated by the discontinued arrows.

The lens (20) is supported on a base (23) that allows the protective gas jet to be fed through it. Likewise, this base (23) is cooled by a flow of cooling liquid that is distributed within a circuit extending along the entire base (23), said circuit comprises a liquid entry (26) and a liquid exit (27) through an upper closing plate (24) of the same. The base (23) is closed at the bottom thanks to a bottom closing plate (25) that allows the deflection of the protective gas jet towards the lens (20). In operative mode, the focusing module (3), more particularly the lens (20) and the base (23), are subjected to high temperatures provoked by the laser beam (4) of the laser source (1) (not shown). Therefore, the focusing module (3) provides independent cooling systems which help cooling both the lens (20) and the base (23) at the same time and in a separated manner.

Figure 4 shows a detailed view of an embodiment of the injection module (5). The injection module (5) is configured for focusing the glass powder or the biphasic glass/gas flow at the converging point (33) coinciding with the focal plane of the laser beam (4) of the laser source (1). Therefore, the laser beam (4) is configured for moltening/softening the glass powder outside any nozzle or conduct, thus not having problems of occlusion or damage to the nozzles or extruder ducts as it occurs with other alternative methods as reported in the background section of this document.

The injection module (5) comprises a plurality of entry points (31), as shown in the embodiment of figure 4, through which the glass powder forming a flow by the action of gravity or the biphasic glass/gas flow (31) is introduced. The biphasic glass/gas flow (31) is configured for being guided through perforations made along the body (30) of the injection module (5), in such a way that the glass powder or the biphasic glass/gas flow (31) is focused towards the converging point (33) by means of an inclined conduit (32). The inclined conduit (32) is in fluidic communication with the plurality of entries (31) and the converging point (33). According to the invention, as shown in figure 4, said inclined conduit (32) is conformed between a hollow cone (36) and a conical casing (37).

In an embodiment, as the one shown in figure 4, the elements of the injection module (5) are also cooled by means of a coolant liquid introduced via a coolant inlet (34) and outputted via a coolant outlet (35) so that the coolant liquid runs through the body (30), through a duct in fluidic communication with the coolant inlet (34) and the coolant outlet (35). In the embodiment shown in figure 4, both the coolant inlet (34) and the coolant outlet (35) are located at the top of the injection module (5).

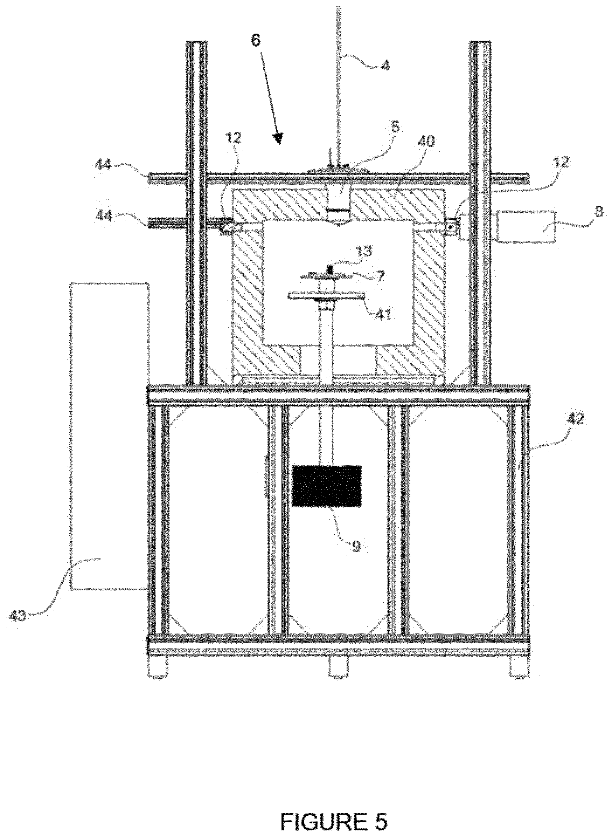

Figure 5 shows a cross-sectional view of an example of the processing chamber (6) comprising the injection module (5). The objective of the processing chamber (6) is to provide the appropriate environment for the morphing of glass parts (13). In that sense, the interior of said processing chamber (6) must be provided at a predetermined temperature to avoid the generation of stresses within the morphed glass parts (13).

The processing chamber (6) accommodates a mobile platform (7) on which the moltening/softening glass is deposited to form the glass part (13) to be morphed. This mobile platform (7) is connected to a kinematic module (9) that allows a three-dimensional movement of the mobile platform (7) within the processing chamber (6) without having to remove the morphed glass parts (13) from the processing chamber (6). In the embodiment shown in figure 5, the processing chamber (6) comprises a closing plate (41) which is configured for cooling the interior of said processing chamber (6) by moving it up or down which allows cold air to enter within the processing chamber (6).

As depicted in the embodiment of figure 5, the processing chamber (6) is held by a supporting frame (42) comprising an upper supporting frame (44) configured for holding the injection module (5). The upper supporting frame (44) permits to regulate the position of the injection module (5) with regard to the processing chamber (6) , thus to regulate the position of the converging point (33) with respect to the focal plane of the focusing module (3), and in order to regulate the temperature reached by the injection module (5).

Also, the processing chamber (6) comprises a plurality of sensors (8), preferably placed on the outside of the processing chamber (6) to monitor the process as in figure 5. Information about the manufacturing process reaches the plurality of sensors (8) through openings (12) that allow observation of the process without a significant loss of temperature.

In an embodiment, a control unit (43) which is configured for controlling all the modules of the system according to the requirements of the glass part (13) to be generated, that is, the laser source (1), the focusing module (3), the crushing module (11), the powder feeder (10), the injection module (5) and the processing chamber (6).

### Examples

The method of the present invention has been used to obtain a glass made of borate glass with composition (weight percentage) of 82 SiO2, 11 B2O3, 2.5 Al2O3, 4 Na2O, 0.5 K2O. A high-power CO2 laser source was used (wavelength: 10,600 nm), focused by means of a focusing module comprising a ZnSe convergent lens such that the irradiance on the converging point (33) was 1.2 MW/cm2. The biphasic glass/gas flow was fed continuously to the glass powder injection module (5) with a flow of 2 g/min. The mobile platform (13) was made out of mullite-alumina and moved at a constant speed of 0.28 mm/s with respect to the stationary laser beam. Water was used as coolant fluid (34) and (36). The processing chamber was kept working at a temperature of 350°C.

## Claims

1. Method for morphing glass parts (13), the method comprising the following steps:
a) selecting a glass raw material comprising particles,
b) providing the glass raw material into a crushing module (11), the crushing module (11) being configured for crushing the glass raw material into glass powder,
c) feeding the glass powder from the crushing module (11) into a powder feeder (10), the powder feeder (10) being configured for,
∘ feeding the glass powder forming a flow by the action of gravity into an injection module (5) by means of a plurality of entries (31), the injection module (5) being comprised in a processing chamber (6), or
∘ mixing the glass powder with a carrier gas forming a biphasic glass/gas flow and feeding said biphasic glass/gas flow into an injection module (5) by means of a plurality of entries (31), the injection module (5) being comprised in a processing chamber (6),
d) providing a laser source (1) configured for emitting a laser beam (4) and wherein the particles of the glass powder are suitable for absorbing the radiation of the laser beam (4) of the laser source (1),
e) guiding the laser beam (4) of the laser source (1) towards a focusing module (3) having ultra-long focal distance, wherein the focusing module (3) is located at a predetermined distance from a converging point (33) comprised in the injection module (5) so that the converging point (33) coincides with the focal plane of the laser beam (4) of the laser source (1),
f) feeding the glass powder or the biphasic glass/gas flow into the plurality of entries (31) of the injection module (5), the injection module (5) being configured for focusing the glass powder or the biphasic glass/gas flow at the converging point (33) of the injection module (5) and the plurality of entries (31) being in a fluidic communication with the converging point (33) by means of an inclined conduit (32) conformed between a hollow cone (36) and a conical casing (38) of the injection module (5),
g) irradiating the glass powder at the converging point (33) of the injection module (5) by means of the laser beam (4) of the laser source (1) so that the glass powder moltens/softens and is deposited on a mobile platform (7), the mobile platform (7) being configured for depositing the moltened/softened glass part, positioning and orientating said mobile platform (7) by means of a kinematic module in the three-dimensional Cartesian coordinate system having X, Y and Z axis,
h) providing heat within the processing chamber (6), the processing chamber (6) being suitable for controlling the temperature within the processing chamber (6) and comprising a plurality of sensors (8) configured for controlling the parameters of the glass part (13).

2. The method according to the preceding claim, wherein the wavelength of the laser beam (4) of the laser source (1) is between 100 and 15.000 nanometers, and more preferably in the range between 1.000 and 12.000 nanometers.

3. The method according to claim 3, wherein the biphasic glass/gas flow is fed continuously from the powder feeder (10) into the injection module (5) with a flow rate between 1 and 250 g/min, and more preferably in the range between 1 and 60 g/min.

4. The method according to claim 3 or 4, wherein the gas of the biphasic glass/gas flow comprises an inert gas, preferably Ar, He, N2.

5. The method according to any of the previous claims, wherein the temperature within the processing chamber (6) is in a range between 200°C and 3000°C, and more preferably in the range between 300°C and 1200°C.

6. The method according to any of the preceding claims, wherein the processing chamber (6) comprises three heating zones configured for carrying out an annealing process on the glass by lowering the mobile platform (7) following a predetermined annealing process temperature-time profile.

7. The method according to any of the preceding claims, wherein the glass raw material comprises at least one oxide of the following elements: Si, B, Al, Na, K, Ca, Mg, S, Fe, Ti, Zr, As, P, V, Cr, Co or Cu; more preferably one oxide of the following elements: Si, B, P, Al, Na, Ca, K, Mg or Fe.

8. The method according to any of the preceding claims, the irradiance of the laser beam (4) of the laser source (1) at the converging point (33) of the injection module (5) is in a range between 0.01 MW/cm2 and 10 MW/cm2, and more preferably in a range between 0.5 MW/cm2 and 4 MW/cm2.

9. The method according to any of the preceding claims, wherein the laser source (1) is selected from Nd:YAG, Nd:glass, Nd:YVO4, Er, Yb, Tm, diode, fiber, disk, CO2, CO, HeCd, copper vapor, Iodine, Argon, Krypton or chemical lasers (HF, DF).

10. The method according to any of the preceding claims, wherein the focusing module (3) with ultra-long focal distance have a focal length in the range between 300 mm and 3,000 mm, preferably between 700 mm and 1500 mm.

11. The method according to any of the preceding claims, wherein the mobile platform (7) is made of a refractory material such as zirconia, mullite alumina, silicon dioxide or similar materials.

12. A device for morphing glass parts (13), the device comprising:
- a laser source (1) configured for emitting a laser beam (4),
- a focusing module (3) having ultra-long focal distance,
- a laser beam guiding module (2) configured for guiding the laser beam (4),
- a crushing module (11) configured for crushing glass raw material into glass powder wherein the glass powder comprises particles, said particles being suitable for absorbing the radiation of the laser beam (4) of the laser source (1),
- a powder feeder (10) located downstream the crushing module (11),
- a processing chamber (6) configured for controlling the temperature within the processing chamber (6), the processing chamber (6) comprising:
∘ an injection module (5) located downstream the powder feeder (11) and downstream the focusing module (3), the injection module (5) being configured for being fed with glass powder forming a flow by the action of gravity, or biphasic glass/gas flow, by means of a plurality of entries (31) and receive the laser beam (4) of the laser source (1),
∘ a mobile platform (7) configured for positioning and orienting glass parts (13) in a three-dimensional Cartesian coordinate system having X, Y and Z axis, the mobile platform (7) being actuated by means of a kinematic module (9), and
∘ a plurality of sensors (8) configured for controlling the parameters of the glass parts (13),
- controlling means (43) configured for controlling the laser source (1), the focusing module (3), the crushing module (11), the powder feeder (10), the processing chamber (6), the injection module (5) and the kinematic module (9),
wherein
the powder feeder (11) is configured for:
- feeding the glass powder forming a flow by the action of gravity into the plurality of entries (31) of an injection module comprised in a processing chamber, or
- mixing the glass powder with a carrier gas forming a biphasic glass/gas flow and feeding said biphasic glass/gas flow into the plurality of entries (31) of an injection module (5) comprised in a processing chamber (6),
the injection module (5) further comprises
a converging point (33) where the glass powder or the biphasic glass/gas flow is focused and
an inclined conduit (32) in fluidic communication with the plurality of entries (31) and the converging point (33), wherein the inclined conduit (32) is conformed between a hollow cone (36) and a conical casing (38) of the injection module (5), and
the focusing module (3) is located at a predetermined distance from the converging point (33) of the injection module (5) so that the converging point (33) coincides with the focal plane of the laser beam (4) of the laser source (1).

13. The device according to claim 12, the laser beam guiding module (2) is a mirror or a reflector module located upstream or downstream the focusing module (3), the mirror or reflector module being configured for guiding the laser beam (4) of the laser source (1).

14. The device according to claim 12 or 13, wherein the processing chamber (6) further comprises openings (12) configured for allowing observation and monitoring of the manufacturing process by means of the plurality of sensors (8).
